# FASCICULE DE BREVET EUROPEEN

(11) **EP 0 433 123 B1**
(45) Date de publication et mention de la délivrance du brevet: **22.02.1995**
(21) Numéro de dépôt: 90403350.3
(22) Date de dépôt: 27.11.1990
(51) Int. Cl.: H04N 3/15

(54) **Procédé et dispositif de compression de débit pour caméra visiophonique munie d'une matrice photosensible à transfert de charges, et système de transmission d'images correspondant**
Verfahren und Vorrichtung zur Datenkompression für eine Videophonkamera, ausgerüstet mit einer photosensiblen Charge-Transfer-Matrix, und System zur Uebertragung solcher Bilder
Method and apparatus of data compression for a videophone camera equipped with a photosensitive charge transfer matrix, and system for the transmission of corresponding images

(30) Priorité: 01.12.1989 FR 8915887
(43) Date de publication de la demande: 19.06.1991
(73) Titulaire: THOMSON-CSF, 75008 Paris (FR); FRANCE TELECOM, 92131 ISSY LES MOULINEAUX (FR)
(72) Inventeur: Guichard, Jacques, 92131 Issy-les Moulineaux (FR); Buchner, Georges, 92131 Issy-les-Moulineaux (FR); Eouzan, Jean-Yves, F-92045 Paris la Défense (FR); Heurtaux, Jean-Claude, F-92045 Paris la Défense (FR)
(74) Mandataire: Lincot, Georges

(56) Documents cités:
- EP-A- 0 067 043
- US-A- 4 472 741

## Description

La présente invention concerne un procédé et un dispositif de compression de débit pour caméra visiophonique munie d'une matrice photosensible à transfert de charges. Elle concerne également un système de transmission d'images correspondant.

Pour réduire le débit des informations transmises par les caméras des systèmes de transmission d'images animées, il est connu de mémoriser les images dans des mémoires tampons ce qui permet de supprimer l'entrelacé des lignes pour ne conserver à la transmission qu'une image sur deux, ou de réduire le nombre d'images transmises par seconde dans les rapports 1/4 ou 1/6, ou encore de coder les images à transmettre avec des codes de différents types, à longueurs variables par exemple. Cependant, ces techniques conduisent à des réalisations coûteuses difficilement transposables aux caméras de visiophone dont les prix de revient doivent être en rapport avec la qualité moyenne exigée pour ce type d 'équipement.

Le but de l'invention est de palier les inconvénients précités.

A cet effet, l'invention a pour objet, un procédé de compression de débit pour caméra visiophonique comprenant une matrice de cellules photosensibles à transfert de charge comme capteur d'images caractérisé en ce qu'il consiste:
- à partager la matrice des cellules photosensibles suivant deux trames de lignes entrelacées de cellules
- à coupler chaque ligne d'une trame avec la ligne homologue de l'autre trame pour obtenir une suite ordonnée de couples de cellules homologues
- à additionner pour chaque couple les valeurs de luminance fournies par chaque cellule
- et à transmettre les valeurs de luminance résultantes associées à chaque couple de cellules.

L'invention a également pour objet un dispositif pour la mise en oeuvre du procédé précité et une application du procédé et du dispositif à la réalisation d'un système de transmission d'images par visiophone.

L'invention a pour avantage de pouvoir s'appliquer aussi bien à des matrices structurées pour effectuer des transferts interlignes qu'à des matrices structurées pour effectuer des transferts intertrames.

Elle a aussi pour autres avantages qu'elle permet d'effectuer, un filtrage spatial sur les points de l'image par addition deux à deux des informations contenues dans les lignes de la matrice photosensible à transfert de charges et un filtrage temporel par réduction du nombre d'images analysées par unité de temps en permettant, par exemple, de passer d'images comportant 50 trames par secondes suivant la norme CCIR à des images défilant aux cadences de 50 ; 25 ; 16,7 ; 12,5 ; 10 ou 8,3 images par seconde par exemple. Elle permet également d'effectuer un filtrage spatio temporel sur les objets ou personnages en mouvement, par le fait que l'échantillonnage effectué sur les points de la matrice photosensible à transfert de charge peut s'effectuer à cadence lente ce qui permet de mieux faire apparaître les composantes basse fréquence du mouvement. D'autre part, la réduction du cadencement des signaux de commande appliqués à la matrice photosensible à transfert de charges, a pour effet d'augmenter le temps d'intégration des cellules à transfert de charge et d'augmenter l'amplitude du signal fourni par chaque cellule de la matrice, ce qui augmente la sensibilité des caméras équipées des matrices photosensibles suivant l'invention.

D'autres caractéristiques et avantages de l'invention apparaîtront ci-après à l'aide de la description qui suit faite en regard des dessins annexés qui représentent :
- la figure 1 une illustration du procédé selon l'invention,
- la figure 2 une matrice de cellules photosensibles à transfert de charges pour caméra de visiophone selon l'invention,
- les figures 3 et 4 deux schémas pour illustrer une mise en oeuvre du procédé selon l'invention,
- les figure 5a et 5b deux graphes de temps correspondant au fonctionnement des dispositifs des figures 2 et 3,
- la figure 6 un schéma synoptique d'un visiophone selon l'invention.

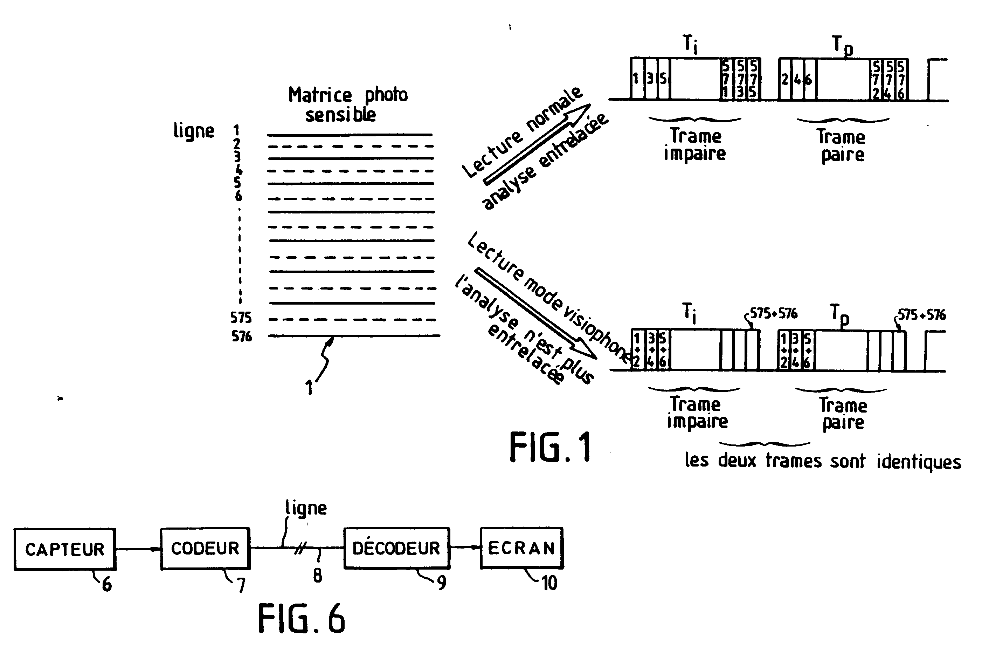

Le procédé selon l'invention, qui est illustré par le schéma de principe de la figure 1, consiste à partager la matrice des cellules photosensibles formant le capteur de la caméra en deux trames de cellules entrelacées, pour opérer une compression de l'image en couplant les lignes homologues de chaque trame entre elles. Ainsi, sur la figure 1, la matrice de cellules photosensibles 1 qui est formée dans cet exemple de 576 lignes, comporte une première trame composée de lignes impaires numérotées de 1 à 575 et de lignes paires numérotées de 2 à 576. Les lignes homologues dans les deux trames forment ainsi une suite ordonnée "S" = (1, 2) ; (3, 4) ; (5, 6)... (575, 576) de couples de lignes. La compression de l'image est ensuite réalisée en additionnant les valeurs de luminance fournies par les cellules photosensibles homologues dans chaque couple de lignes. Les résultats obtenus des additions sont après codés sous toute forme appropriée connue pour permettre leur transmission à destination de récepteurs visiophoniques.

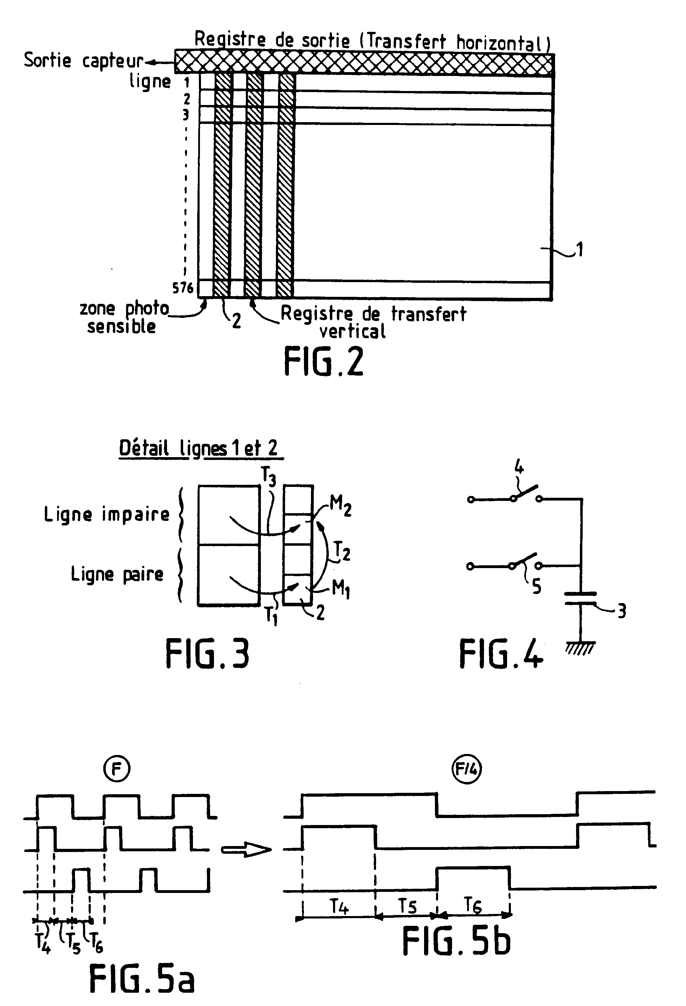

De la sorte, les cellules photosensibles fournissent deux trames d'images, paires Tₚ et impaires Tᵢ, identiques lorsqu'elles sont lues par le générateur de balayage de la caméra, contrairement à ce qui est obtenu lorsque les deux trames sont lues successivement sans qu'il y ait couplage entre lignes homologues des deux trames. Une matrice de cellules photosensibles à transfert de charges 1 permettant d'obtenir ce résultat est représentée à la figure 2. Elle est organisée en structure "Transfert Interligne" et comprend, disposé entre les colonnes consécutives de cellules photosensibles de la matrice, un registre 2 de cellules de mémorisation à transfert de charges. Chaque cellule du registre 2 permet, de la manière représentée aux figures 3 et 4 l'addition des charges électriques fournies par deux cellules photosensibles homologues dans chacune des trames de cellules. L'opération s'effectue durant trois instants successifs figurés par T1, T2 et T3 sur la figure 3. Durant l'instant T1 la charge électrique fournie par chaque cellule d'une ligne paire est transférée dans une cellule de mémorisation M1 du registre 2. Durant l'instant T2 la charge électrique mémorisée dans la cellule M1 est transférée à l'intérieur d'une cellule M2 de mémorisation du registre 2. Durant l'instant T3, la charge électrique mémorisée dans une cellule de mémorisation M2 est ajoutée à la charge électrique provenant de la cellule photosensible homologue dans l'autre trame. Cependant il faut noter que ce mode de réalisation n'est pas unique et qu'il peut exister d'autres variantes consistant notamment comme le montre la figure 4 à injecter les deux charges électriques provenant de chaque couple de cellules photosensibles dans une capacité 3 reliée aux cellules au travers de deux dispositifs de commutation 4 et 5 formés, par exemple, par des transistors MOS dans le cas d'utilisation d'une matrice à structure "Transfert de Trame" où les registres à transfert de charges sont constitués des colonnes de cellules photosensibles elles-mêmes.

Tous les instants caractéristiques nécessaires au fonctionnement du système suivant l'invention sont obtenus au moyen d'un séquenceur de signaux de synchronisation non représenté dont un mode de réalisation possible peut être trouvé par exemple dans la demande de brevet français FR 2 596 600 déposée au nom de la Société THOMSON-CSF ayant pour titre "Générateur de signaux de synchronisation programmable".

Pour permettre d'effectuer éventuellement un filtrage temporel, les signaux devront avoir des durées variables mais avec des phases relatives et des rapports cycliques constants.

Comme représenté aux figures 5a et 5b pour un signal quelconque aux instants caractéristiques T₄, T₅, T₆, etc... le séquenceur doit alors être programmé pour fournir à partir d'une horloge à fréquence variable, les signaux nécessaires à la commande de la matrice de cellules photosensibles et de la chaîne de traitement de la caméra non représentée qui lui est associée. Dans ce but les instants caractéristiques des signaux de commande doivent rester parfaitement homothétiques pour assurer dans tout le domaine des fréquences considérées les transferts de charge dans les directions verticale et horizontale de la matrice et permettre le traitement des signaux fournis par la matrice à transfert de charge dans la caméra, tels que les opérations d'échantillonnage, de séparation des signaux de luminance et de chrominance, la restitution de la composante continue, ainsi que les opérations de suppression et de synchronisation.

Par exemple, au lieu d'entrer des informations de luminance à la cadence de 625 lignes par seconde suivant la norme CCIR dans des mémoires disposées dans le codeur bas débit et de n'en prélever par échantillonnage qu'une sur un nombre déterminé n suivant le débit en ligne et la quantité d'informations à traiter, l'utilisation d'une horloge à fréquence variable pour piloter le séquenceur permet de choisir une cadence d'analyse du dispositif photosensible réglable de façon continue, par exemple entre 50 images par seconde et 8,3 images par seconde, et simplifie les étages de conversion et de relecture des circuits de codage de la caméra. Cependant il est à remarquer qu'en procédant ainsi il se produit immanquablement un effet de "flou" sur les personnages ou objets se déplaçant dans le champ de la caméra durant le temps d'intégration des cellules à transfert de charge qui est d'autant plus important que la cadence d'analyse de l'image est plus faible. Ce "flou" parfois appelé aussi traînage, peut être avantageusement mis à profit pour d'une part, simplifier la réalisation des codeurs bas débit des caméras qui ont ainsi moins d'informations à transmettre par le fait que la résolution spatiale sur des objets en mouvement est diminuée et d'autre part, pour simplifier également la réalisation des détecteurs de mouvement, nécessaire dans le codage lorsque le débit instantané des informations à traiter est trop important, par le fait que les composantes spatiales basse fréquence du mouvement sont alors prédominantes.

A la différence des systèmes d'analyse bas débits connus dans lesquels la réduction du cadencement se fait par prélèvement périodique d'images (1 sur 2, ou 3 ou n...) analysées avec un temps d'intégration constant de 20 ms, le procédé et le dispositif selon l'invention permettent d'effectuer ces mêmes analyses aux mêmes cadences mais avec un temps d'intégration qui se trouve allongé dans les rapports de vitesse inverses des cadencements c'est-à-dire de 2, 3 ou n... pour des réductions respectives de cadencement de 1/2, 1/3 ou 1/4. Comme l'amplitude du signal délivré par chaque cellule photosensible est proportionnelle au temps d'intégration, I'amplitude du signal délivré se trouve aussi multipliée dans le rapport de croissance du temps d'intégration lorsque la cadence diminue, en considérant naturellement constants la luminance de la scène observée par la caméra et l'ouverture relative de son système optique. Ceci présente d'ailleurs un autre avantage qui est de permettre une réalisation aisée du filtrage passe bas de la sortie bas débit des caméras munies des matrices à cellules photosensibles de l'invention, en donnant au filtre numérique correspondant une fréquence de coupure qui varie elle aussi dans les rapports 1/2, 1/3 ... 1/n des cadencements, puisque la fréquence de coupure est pour ces filtres égale à la moitié de la fréquence d'échantillonnage. Par contre, comme la tension du niveau de noir délivrée par chaque cellule photosensible se voit aussi augmentée dans les rapports 2, 3 ... et n alors que la tension efficace de bruit qui lui est associée n'augmente que dans les rapports 1/2, 1/3 et 1/n, le rapport signal à bruit augmente en même temps que diminue la cadence d'analyse. Le procédé permet ainsi d'obtenir, par exemple, par rapport aux procédés antérieurs, une amélioration du rapport signal à bruit de 10 dB pour un cadencement d'image de 8,3 Hz soit, une amélioration de la sensibilité dans un rapport 3, ce qui est très important pour les systèmes de codage-décodage (CODEC) numériques, dont les performances sont conditionnées par le rapport signal à bruit du signal d'entrée.

Un système de transmission d'images pouvant mettre en oeuvre le procédé et le dispositif selon l'invention est représenté à la figure 6. Il comporte de façon connue un capteur d'images 6, un codeur 7, une ligne ou canal de transmission 8, un décodeur 9 et un écran de visualisation 10.

## Revendications

1. Procédé de compression de débit pour caméra visiophonique comprenant une matrice de cellules photosensibles à transfert de charges (1) comme capteur d'images caractérisé en ce qu'il consiste :
- à partager la matrice des cellules photosensibles suivant deux trames de lignes (1...576) entrelacées de cellules
- à coupler chaque ligne (1, 2 ; ... 575, 576) d'une trame avec la ligne homologue de l'autre trame pour obtenir une suite ordonnée de couples de cellules homologues
- à additionner (2, 3) pour chaque couple les valeurs de luminance fournies par chaque cellule
- et à transmettre les valeurs de luminance résultantes associées à chaque couple de cellules.

2. Procédé selon la revendication 1 caractérisé en ce que l'addition des valeurs de luminance fournies par chaque couple de cellules a lieu par transfert des charges électriques émises par chaque cellule dans des cellules de mémorisation à transfert de charge (M2) commune respectivement à chaque couple de cellules, ou dans les registres constitués des colonnes de cellules photosensibles.

3. Procédé selon l'une quelconque des revendications 1 et 2 caractérisé en ce que le transfert de charges émises par chaque cellule est cadencé au moyen d'un générateur à fréquence variable.

4. Dispositif pour la mise en oeuvre du procédé selon l'une quelconque des revendications 1 à 3 dans lequel chaque matrice de cellules photosensibles comprend, disposé entre les colonnes consécutives de la matrice, un registre (2) de cellules de mémorisation à transfert de charges et dans lequel chaque matrice de cellules photosensibles est constituée de colonnes faisant office à la fois de cellules photosensibles et de registres à transfert de charges caractérisé en ce que chaque cellule de mémorisation d'un registre est couplée à une cellule photosensible de la matrice au moyen d'un dispositif de commutation (4, 5).

5. Dispositif selon la revendication 4 caractérisé en ce chaque dispositif de commutation (4, 5) est formé par un transistor MOS.

6. Système de transmission d'images comprenant un capteur d'images (6) couplé à un écran de visualisation (10) au travers d'un canal de transmission (8) caractérisé en ce que le capteur d'image (6) comprend une matrice de cellules photosensibles (1) disposées en couple, comprenant plusieurs registres (2) de cellules de mémorisation à transfert de charge pour additionner les charges électriques fournies par les cellules photosensibles de chaque couple et coder les grandeurs électriques résultantes avant leur transmission sur le canal de transmission (8), avec un cadencement variable dans le but, de réduire le débit des informations à coder, d'améliorer la sensibilité du système et de simplifier le procédé de codage-décodage.

## Patentansprüche

1. Verfahren zur Datenkompression für eine Videophonkamera mit einer photosensiblen Ladungsübertragungsmatrix (1) als Bildaufnehmer, dadurch gekennzeichnet, daß es darin besteht:
- die Matrix aus photoempfindlichen Zellen in zwei Raster ineinander verschachtelter Zellenzeilen (1 ... 576) zu unterteilen,
- jede Zeile (1, 2; ... 575, 576) eines Rasters mit einer entsprechenden Zeile des anderen Rasters zu koppeln, um eine geordnete Folge von Paaren entsprechender Zellen zu erhalten,
- für jedes Paar die von jeder Zelle gelieferten Luminanzwerte zu addieren (2, 3), und
- die jedem Zellenpaar zugeordneten resultierenden Luminanzwerte zu übertragen.

2. Verfahren nach Anspruch 1, dadurch gekennzeichnet, daß die Addition der von jedem Zellenpaar gelieferten Luminanzwerte durch Übertragen von durch jede Zelle abgegebenen elektrischen Ladungen in jeweils jedem Zellenpaar angehörigen Ladungsübertragungs-Speicherzellen (M2) oder in von Spalten der photosensiblen Zellen gebildeten Registern erfolgt.

3. Verfahren nach einem der Ansprüche 1 und 2, dadurch gekennzeichnet, daß die Übertragung der von jeder Zelle abgegebenen Ladungen mit Hilfe eines Generators mit variabler Frequenz getaktet wird.

4. Vorrichtung zur Durchführung des Verfahrens nach einem der Ansprüche 1 bis 3, bei welcher jede Matrix aus photosensiblen Zellen zwischen den aufeinanderfolgenden Spalten der Matrix ein Register (2) aus Ladungsübertragungs-Speicherzellen enthält, und bei welcher jede Matrix aus photosensiblen Zellen aus Spalten gebildet ist, die gleichzeitig als photosensible Zellen und als Ladungsübertragungsregister dienen, dadurch gekennzeichnet, daß jede Speicherzelle eines Registers mit einer photosensiblen Zelle der Matrix mittels einer Schaltvorrichtung (4, 5) gekoppelt ist.

5. Vorrichtung nach Anspruch 4, dadurch gekennzeichnet, daß jede Schaltvorrichtung (4, 5) von einem MOS-Transistor gebildet ist.

6. Bildübertragungssystem mit einem Bildaufnehmer (6), der mit einem Bildschirm (10) über einen Übertragungskanal (8) verbunden ist, dadurch gekennzeichnet, daß der Bildaufnehmer (6) eine Matrix (1) aus paarweise angeordneten photosensiblen Zellen enthält, die mehrere Register (2) aus Ladungsübertragungs-Speicherzellen zum Addieren der von den photosensiblen Zellen jedes Paars gelieferten elektrischen Ladungen und zu codieren der resultierenden elektrischen Größen vor ihrer Übertragung über den Übertragungskanal (8) mit einer variablen Folgefrequenz enthält mit dem Ziel, den Durchsatz der zu codierenden Informationen zu reduzieren, die Empfindlichkeit des Systems zu verbessern und das Codier-Decodier-Verfahren zu vereinfachen.

## Claims

1. Method of throughput compression for a videophone camera comprising an array of charge-transfer photosensitive cells (1) as an image sensor, characterised in that it consists:
- in dividing up the array of photosensitive cells into two frames of interlaced lines (1...576) of cells
- in coupling each line (1, 2; ...575, 576) of one frame with the counterpart line of the other frame to obtain an ordered sequence of pairs of counterpart cells
- in compounding (2,3) for each pair the luminanace values supplied by each cell
- and in transmitting the resulting luminance values associated with each pair of cells.

2. Method according to Claim 1, characterised in that the compounding of the luminance values supplied by each pair of cells takes place by transferring the electric charges emitted by each cell into charge-transfer storage cells (M2), which charge is common respectively to each pair of cells, or into the registers consisting of columns of photosensitive cells.

3. Method according to either one of Claims 1 and 2, characterised in that the transfer of charges emitted by each cell is timed by means of a variable-frequency generator.

4. Device for implementing the method according to any one of Claims 1 to 3, in which each array of photosensitive cells comprises, arranged between the consecutive columns of the array, a register (2) of charge-transfer storage cells and in which each array of photosensitive cells consists of columns acting both as photosensitive cells and as charge-transfer registers characterised in that each storage cell of a register is coupled to a photosensitive cell of the array by means of a switching device (4, 5).

5. Device according to Claim 4, characterised in that each switching device (4, 5) is formed by a MOS transistor.

6. Image transmission system comprising an image sensor (6) coupled to a viewing screen (10) across a transmission channel (8), characterised in that the image sensor (6) comprises an array of pairwise-arranged photosensitive cells (1), comprising several registers (2) of charge-transfer storage cells for compounding the electric charges supplied by the photosensitive cells of each pair and coding the resulting electrical magnitudes before their transmission on the transmission channel (8), with a variable timing aimed at reducing the throughput of the information to be coded, improving the sensitivity of the system and simplifying the coding-decoding method.
